# EUROPEAN PATENT APPLICATION

(11) **EP 4 752 720 A1**
(43) Date of publication of application: **03.06.2026**
(21) Application number: 24216252.7
(22) Date of filing: 28.11.2024
(51) Int. Cl.: G06F 9/50, G06F 1/3203

(54) **AN IMPROVED POWER MANAGEMENT METHOD**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

There is herein described a method of operating a data centre in response to a reduction in a power supply to the data centre, the method comprising using state information to relocate one or more high priority applications running on the one or more servers, away from the one or more servers, where the state information comprises information relating to one or more servers located at the data centre and/or one or more applications running on the one or more servers.

## Description

Data centres can suffer from power outages, i.e. a failure of the mains power supply to the data centre.

In order to prevent data being lost, data centres are provided with an Uninterruptible Power Supply which provides auxiliary power to the data centre. This auxiliary power is a lower level of power than the mains supply and only lasts a limited time. During this time, the servers at the data centre are backed up and gracefully shut down. Although data loss is prevented, this method has the disadvantage that the severs are inactive until the mains power supply has been re-established.

It would be desirable to overcome and/or substantially mitigate some or all of the above-mentioned and/or other disadvantages of the prior art.

According to a first aspect of the invention there is provided a method of operating a data centre in response to a reduction in a power supply to the data centre, the method comprising:
using state information to relocate one or more high priority applications running on the one or more servers, away from the one or more servers,
where the state information comprises information relating to one or more servers located at the data centre and/or one or more applications running on the one or more servers.

The step of using state information to relocate the one or more high priority applications may comprise inputting the state information to a control algorithm. The control algorithm may identify the high priority applications and send an instruction to a management module to relocate one or more high priority applications.

State information may comprise information identifying the one or more servers. The state information may further comprise data relating to the resources contained in each of the one or more servers. That data may comprise one or more of:
CPU count;
RAM size;
storage capacity;
chip manufacturer identity.

State information may comprise information identifying the one or more applications running on the servers. State information may further comprise data indicative of one or more of:
relative priorities of the one or more applications,
hardware dependencies of the one or more applications;
dependencies on other workloads of the one or more applications;
sensitivities to resource constraints of the one or more applications.

State information may further comprise:
data identifying which of the one or more servers, each of the one or more applications is running on.
the total current utilisation of server resources;
system usage statistics;
process statistics;
power consumption by each of the one or more servers; and
power input state to the data centre.

State information may be obtained from the one or more servers using telemetry.

A management module may provide the state information to the control algorithm and may do so on a regular basis. The control algorithm may be performed by a control algorithm module. The reduction in the power supply may be a failure of the mains power supply to the data centre.

In the event of a power failure, an Uninterruptible Power Supply may provide auxiliary power to the data centre for a limited time. Furthermore, in response to the power failure, the Uninterruptible Power Supply may send a trigger signal to the control algorithm module, indicating that power has been lost. In response to the trigger signal, the control algorithm module may perform the control algorithm using the most recent values of the state information it has received from the management module as inputs. The control algorithm may also use historical state information as input. The control algorithm may output an instruction to the management module to perform one or more of the following actions:
Discontinue the running on one or more servers of one or more applications that the state information indicates to be as low-priority and shut down the one or more servers upon which they run;
Move high-priority applications onto a small number of servers, eg one single server, and shut down the other servers;
Reduce the core frequency of the CPUs in one or more servers;
Reduce the uncore frequency of the CPUs in one or more servers;
Reduce the memory bandwidth of one or more servers;
Discontinue one or more applications running on the one or more servers and instruct a further data centre to run the one or more applications, and shut down the one or more servers;
Back up the one or more servers;
Shut down the one or more servers.

The data centre may be located at the edge of a telecommunications network.

According to a second aspect of the invention there is provided a power management system for managing the operation of a data centre in response to a reduction in a power supply to the data centre, the system comprising:
A management apparatus adapted to use state information to relocate one or more high priority applications running on the one or more servers, away from the one or more servers,
where the state information comprises information relating to one or more servers located at the data centre and/or one or more applications running on the one or more servers.

The management apparatus may comprise a control algorithm module and a management module. The features noted above in relation to the first aspect of the invention are applicable to the second aspect of the invention.

An embodiment of the invention will now be described in detail, for illustration only, with reference to the appended drawings, in which:
Fig 1 is a schematic view of a data centre and backup power system according to the prior art;
Fig 2 is a schematic view of a data centre and backup power system according to embodiments of the invention.

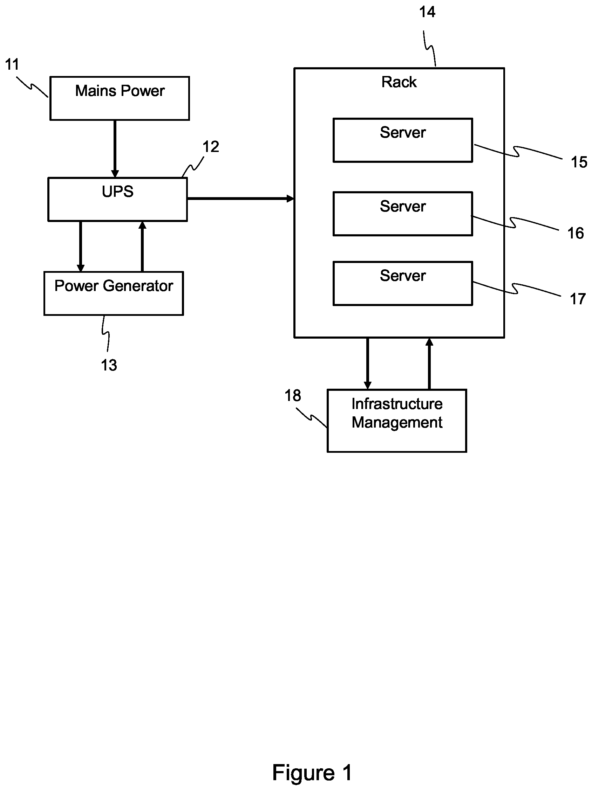

Fig 1 shows a schematic view of a data centre and backup power system according to the prior art. The data centre is located at an edge location. This means it is located closer to the network edge (ie the customer) than a centralised data centre. The data centre comprises servers 15, 16 and 17 on rack 14. Infrastructure management component 18 manages the operation of the servers in a manner that would be familiar to the person skilled in the art.

The mains power 11 supplies the rack 14 via Uninterruptible Power Supply (UPS) 12. In the event of a power outage, power form the mains power 11 is lost. UPS 12 detects this outage and sends a trigger signal to power generator 13. The trigger signal causes power generator 13 to provide a temporary power supply to UPS 12, which in turn directs that temporary power supply to the server rack 14. During the time that the temporary power supply lasts, the infrastructure management component 18 instructs the servers to back up their systems and perform a graceful shutdown. This ensures that all data is saved. However, this approach has the disadvantage that the data centre is then inactive until power returns.

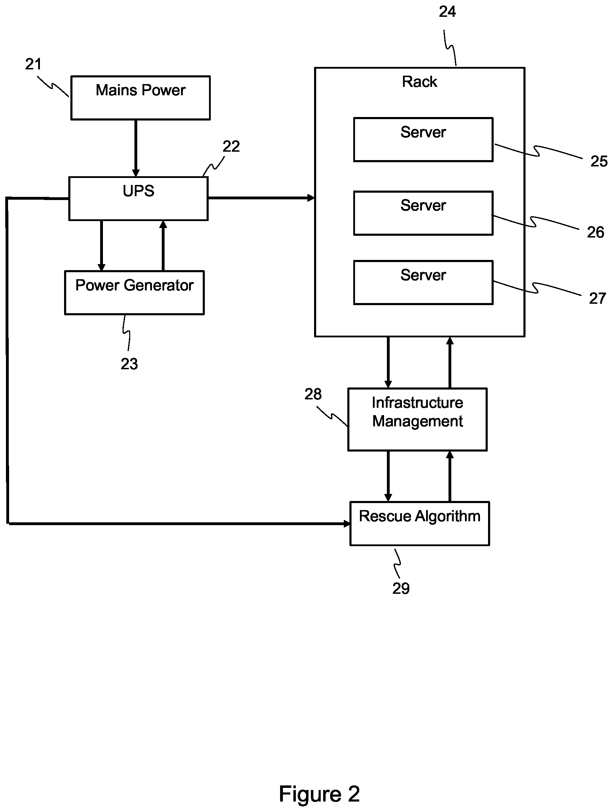

Fig 2 is a schematic view of a data centre and backup power system according to embodiments of the invention. Fig 2 has many like components with Fig 1. These components are numbered in a like fashion. In addition to the components of Fig 1, Fig 2 also has a rescue algorithm component 29. The rescue algorithm component 29 is electrically connected to both the UPS 22 and the infrastructure management component 28. Infrastructure management component 28 provides state information to rescue algorithm component 29.

The events following a power outage using the arrangement of Fig 2 will now be described. In particular, if power from the mains power supply 21 is lost, this outage is detected by UPS 22. UPS 22 then sends a trigger signal to power generator 23. The trigger signal causes power generator 23 to provide a temporary power supply to UPS 22, which in turn directs that temporary power supply to the server rack 24. In contrast to the method of the prior art, the servers 15, 16, 17 are not backed up and shut down automatically.

In normal operation, infrastructure management component 28 transmits state information to the rescue algorithm component 29. State information comprises i) hardware information and ii) workload information.

Hardware information comprises information relating to the current hardware at the data centre. For example hardware information comprises an inventory of the servers along with their respective resource eg CPU count, RAM, storage capacity, and chip manufacturer identity.

Workload information comprises an inventory of the applications running on the servers. This contains information such as the relative priorities of the different applications, their hardware dependencies, their dependencies on other workloads, and their sensitivities to resource constraints. Workload information also contains workload-related information obtained in real time eg through telemetry. This information comprises, eg the identity of the server an application is running on, and the total current utilisation of server resources, system usage statistics, process statistics, power consumption and power input state.

In response to the power state signal from UPS 22 indicating that power has been lost, the rescue algorithm component 29 inputs the latest values of the state information it has received from the infrastructure management component 28 into a rescue algorithm. The rescue algorithm outputs one or more power-conservation actions. Some examples of these actions are:
Discontinue the running on servers 25, 26 and 27 of applications identified by the state information as low-priority and shut down the servers upon which they run;
Move high-priority applications onto a small number of servers, eg one single server, and shut down the other servers;
Reduce the core frequency of the CPUs in servers 25, 26 and 27;
Reduce the uncore frequency of the CPUs in servers 25, 26 and 27;
Reduce the memory bandwidth of the servers 25, 26 and 27;
Discontinue one or more applications running on the servers 25, 26 and 27 and instruct a different data centre (not shown in Fig 2) to run the one or more applications on its servers. The servers 25, 26 and 27 upon which the applications ran are then shut down.

As these actions result in the shutting down of some of the servers, and/or running the remaining servers on reduced power, the datacentre can continue to operate on lower power than normal. As the algorithm takes the current power consumption into account, the instructed actions take account of the remaining backup power. If it is about to run out, the remaining active servers are backed up and a graceful shut down is implemented.

## Claims

1. A method of operating a data centre in response to a reduction in a power supply to the data centre, the method comprising:
using state information to relocate one or more high priority applications running on the one or more servers, away from the one or more servers,
where the state information comprises information relating to one or more servers located at the data centre and/or one or more applications running on the one or more servers.

2. A method as claimed in claim 1, wherein the state information comprises information identifying the one or more servers.

3. A method as claimed in claim 1 or claim 2, wherein the state information further comprises data relating to the resources contained in each of the one or more servers, the data comprising one or more of:
CPU count;
RAM size;
storage capacity;
chip manufacturer identity.

4. A method as claimed in any preceding claim, wherein the state information comprises data indicative of one or more of:
relative priorities of the one or more applications,
hardware dependencies of the one or more applications;
dependencies on other workloads of the one or more applications;
sensitivities to resource constraints of the one or more applications.

5. A method as claimed in any preceding claim, wherein the state information further comprises one or more of:
data identifying which of the one or more servers, each of the one or more applications is running on;
the total current utilisation of server resources;
system usage statistics;
process statistics;
power consumption by each of the one or more servers; and
power input state to the data centre.

6. A method as claimed in any preceding claim, wherein the state information is obtained from the one or more servers using telemetry.

7. A method as claimed in any preceding claim, wherein the step of relocating one or more high priority applications running on the one or more servers, away from the one or more servers, comprises:
moving high-priority applications onto a small number of servers, eg one single server, and shut down the other servers; and/or
discontinuing one or more applications running on the one or more servers and instruct a further data centre to run the one or more applications, and shut down the one or more servers.

8. A method as claimed in any preceding claim, wherein the step of using state information to relocate one or more high priority applications running on the one or more servers, away from the one or more servers comprises performing a control algorithm using the state information as inputs, and instructing a management module to perform the step of relocating one or more high priority applications running on the one or more servers, away from the one or more servers.

9. A method as claimed in any preceding claim, wherein the control algorithm outputs an instruction to the management module to perform one or more of the following actions:
discontinue the running on one or more servers of one or more applications that the state information indicates to be as low-priority and shut down the one or more servers upon which they run;
move high-priority applications onto a small number of servers, eg one single server, and shut down the other servers;
reduce the core frequency of the CPUs in one or more servers;
reduce the uncore frequency of the CPUs in one or more servers;
reduce the memory bandwidth of one or more servers;
discontinue one or more applications running on the one or more servers and instruct a further data centre to run the one or more applications, and shut down the one or more servers;
back up the one or more servers;
shut down the one or more servers.

10. A power management system for managing the operation of a data centre in response to a reduction in a power supply to the data centre, the system comprising:
a management apparatus adapted to use state information to relocate one or more high priority applications running on the one or more servers, away from the one or more servers,
where the state information comprises information relating to one or more servers located at the data centre and/or one or more applications running on the one or more servers.
